# EUROPEAN PATENT SPECIFICATION

(11) **EP 2 519 833 B1**
(45) Date of publication and mention of the grant of the patent: **05.08.2015**
(21) Application number: 10835276.6
(22) Date of filing: 27.12.2010
(51) Int. Cl.: G01S 13/10, G01S 7/03, G01S 13/87, G01S 13/88, G01S 13/00, G01S 13/02, H01Q 1/27

(54) **RADAR APPARATUS AS WELL GARMENT AND GARMENT ASSEMBLY COMPRISING THE APPARATUS**
RADARVORRICHTUNG SOWIE BEKLEIDUNG UND BEKLEIDUNGSANORDNUNG MIT DER VORRICHTUNG
APPAREIL DE RADAR, ET VÊTEMENT ET ENSEMBLE DE VÊTEMENT COMPRENANT UN TEL APPAREIL

(30) Priority: 28.12.2009 IT BS20090239; 28.12.2009 IT BS20090238
(43) Date of publication of application: 07.11.2012
(73) Proprietor: Cover Technology S.r.l., 25080 Serle (BS) (IT)
(72) Inventor: KOVACS VAJNA, Zsolt Miklos, I-25062 Concesio (bs) (IT); CACCIATORI, Alessio, I-25123 Brescia (BS) (IT); CAVAGNINI, Gianluca, I-25085 Gavardo (bs) (IT)
(74) Representative: Maroscia, Antonio
(86) International application number: PCT/IB2010/056076
(87) International publication number: WO 2011/080688

(56) References cited:
- EP-A1- 1 744 177
- WO-A1-01/65276
- WO-A2-2007/035224
- US-A- 4 980 690
- US-A1- 2005 248 482
- US-B1- 6 250 601

## Description

### Field of the invention

The present invention generally finds application in the field of surveillance and safety devices, and particularly relates to a radar apparatus for detecting targets within an area to be monitored.

The invention further relates to a clothing element comprising such apparatus and a support unit for such radar apparatus.

### Background art

Radar apparatus for detecting targets within an area being monitored are known to have multiple applications, in both civil and military fields.

For instance, radar apparatus are known to be used in the military field for remote detection of aircrafts or other moving vehicles.

Known radar apparatus are also available to the police for detecting the presence and speed of moving vehicles, such as common speed cameras and radar apparatus adapted to be associated with a moving vehicle to allow detection of obstacles along its path.

As a rule, these apparatus comprise one or more transmitting devices having an antenna for transmitting RF signals and one or more receiving devices having antennas for receiving further RF signals generated by the reflection the transmitted signals on the targets within the range of the antennas.

Thus, measurement of the time from transmission to reception of the RF signal can provide an estimate of target position.

The operation of these apparatus is based on the presence of directional antennas adapted to convey the whole power emitted by the RF signal in a desired direction, while increasing the range of the apparatus and the detection accuracy.

3D radar apparatus are also known, i.e. apparatus that allow detection of both the presence of a target, such as an object or a person, and its three-dimensional shape.

These special apparatus are particularly useful in applications, generally of military type, in which it is essential to discriminate what is being detected between objects of no interest, such as a flying bird, and vehicles, possibly of small size.

The shape of the detected target is reconstructed by scanning the area being monitored. In practice, the highly directional electromagnetic beam is rotated to scan the whole observation area.

Such "rotation" may occur by mechanical means, by physically rotating the antenna or the array of antennas, or by electric means, using sets of antennas supplied with appropriately frequency-offset or time-delayed signals.

Prior art radar apparatus generally require high-directivity antennas, or sets of lower-directivity antennas, as high directivity is required for the radar apparatus to ensure improved image resolution.

For this purpose, the antenna is required to have an adequate volume, as larger antennas are better suited to convey the power transmitted in a given direction.

Therefore, prior art radar apparatus have a high power consumption and large sizes.

A further typical drawback of these apparatus, of either one-dimensional or three-dimensional type, is their high power absorption.

This is because the receiving devices, i.e. the antennas and electronic circuits for handling and processing RF signals are always on, and involve high power consumption. Accordingly, they have a considerably shorter uptime.

3D apparatus are also known which increase detection definition, even with lower-directivity antennas, by using complex processing algorithms, such as SAR algorithms, which impose higher requirements on the received signal processing section. Furthermore, SAR algorithms require the radar system and the environment being monitored to move relative to each other.

These algorithms are also used to reduce noise and interferences in the received signal, but do not provide significant results, especially if noise is willingly generated by users to prevent radar detection.

US 2005/0248482 discloses a 3D radar apparatus having data processing means for identifying a grid of delimited areas in the area being monitored and estimating the "round-trip time" or the time required for a signal to reach each of such areas and back to the receive antennas if an object reflects it.

Thus, the received reflected signals are processed by associating the parts of interest to the relevant areas. In this case, the signals may be processed by time windowing filters that reduce noise. The combined detection is obtained by summing together the detections of each delimited area.

Nevertheless, while this solution reduces the effects of noise and interferences through an analysis of the received signals, it still suffers from the same drawbacks as the previous solutions, in terms of high power consumption.

Furthermore, improved detection definition requires the use of a great number of antennas and of directional antennas, whereby the apparatus has still a large size.

This characteristic is an apparent limitation, particularly in those applications in which these apparatus are used by moving personnel, e.g. during actions of armed forces or special public security units, such as special emergency or firefighting teams.

In these cases, users are apparently hindered in their movements and in the use of their regulation weapons, and cannot actively join actions.

From EP1744177 a radar system is known having all the features mentioned in the preamble of claim 1 and which comprises at least two transmitting units adapted to transmit simultaneously and in synchronization electromagnetic radiations in distinct frequencies toward an area of interest. The radar system is silent about the manner to reconstruct the 3D shape of the target.

### Disclosure of the invention

The object of the present invention is to obviate the above drawbacks by providing a radar apparatus, possibly of 3D type, that has a particularly high detection definition, for the most accurate identification of the targets within an area being monitored.

A further object of the invention is to provide a radar apparatus, particularly of 3D type, that has a particularly compact size, allowing it to be associated with any garment or clothing accessory, and possibly integrated therein, thereby allowing its user the highest freedom of movement.

A particular object is to provide a radar apparatus that has a lower power consumption and a considerably longer uptime, as compared with prior art apparatus.

Another object of the present invention is to provide a particularly inexpensive and effective radar apparatus.

Yet another object is to provide a radar apparatus that allows detection and identification of targets such as persons or objects within an area being monitored in as short a time as possible.

These and other objects, as better explained hereinafter, are fulfilled by a radar apparatus as defined in claim 1

The apparatus comprises at least three receiving devices to define a 3D radar apparatus.

Thus, upon transmission of the RF signal, the receiving device/s may be kept off and be only turned on in a predetermined off-time window, thereby affording power savings.

For instance, this time window may be the one in which the reflected signal is expected to arrive.

Conveniently, each receiving device will include a receive antenna and an electronic enabling unit connected to the processing and control means for selectively switching on/off the transmission of the reflected signal received by the receive antenna to such unit.

Preferably, the radar apparatus may be of the "pulsed" type, using RF pulsed signals to reduce the size of the time window during which the receiving devices are on.

Therefore, the apparatus will be also much more insensitive to noise, especially the noise that is intentionally generated by users to prevent radar detection.

Thus, time windowing of the receiving device will both allow overall received noise reduction and prevent such noise, especially when intentionally generated, from saturating the receiving devices themselves, and hence from making them useless.

The proposed configuration will also allow the use of omnidirectional antennas, and thus optimize the consumption and size thereof.

With the use of this type of antennas in a 3D apparatus, the area under monitoring will be defined by the intersection of three spherical or ellipsoidal spheres, each for one of the receiving devices.

Each sphere will have an average radius depending on the predetermined round-trip time, i.e. the two-way travel time of the transmitted and reflected RF signals.

Therefore, the on-time windowing of each device will define the minimum radius of the related sphere.

The width of the sphere will be also determined by the time length of the pulse that forms the transmit RF signal.

The resolution of the three-dimensional image so obtained will depend on the intersection volume of the three spheres and hence on the duration of the transmitted pulses only. Therefore, the shorter the pulse, the smaller the spheres and the higher the overall resolution.

Accordingly, a three-dimensional radar image may be obtained using small low-directivity antennas, which will also afford a considerable reduction of the overall size of the radar apparatus.

The short duration of the transmitted pulses will also allow the receive antennas to be considerably closer to each other. The minimum spacing of receive antennas is known to be determined by the requirement that the reflected signal received by each of them have a time window separate from those of the other receive antennas. If this requirement is not fulfilled, the antennas that receive the reflected signal within the same time window may be considered as a single receive antenna, and this will reduce the detection power of the array of receive antennas. Therefore, in the minimum case of three receive antennas, no three-dimensional detection might be performed, because there will be less than three actual receive antennas.

As a result, the present radar apparatus may have a particularly compact size, as its receiving antennas may be at closer distances from each other.

This configuration will allow the radar apparatus to be associated with any garment or clothing accessory, and give the wearer freedom of movement.

In a further aspect, the invention provides a clothing element comprising the above mentioned radar apparatus, as defined in claim 14.

In yet another aspect, the invention provides a garment assembly to be used in combination with the above mentioned radar apparatus as defined in claim 15.

In a further aspect, the invention provides a method for detecting targets within a predetermined area using a 3D radar apparatus as defined in claim 16.

Advantageous embodiments of the invention are defined in accordance with the dependent claims.

### Brief description of the drawings

Further characteristics and advantages of the invention will be more apparent from the detailed description of a few preferred, non-exclusive embodiments of a 3D radar apparatus of the invention, which are described as non-limiting examples with the help of the annexed drawings, in which:
Fig. 1 is a schematic view of a radar apparatus of the invention in an operating step;
Fig. 2 shows an operating time of the radar apparatus of the invention;
FIGS. 3 to 5 show details of the radar apparatus of the invention FIG. 6 shows a diagram of a signal reflected from a target, in a 3D radar apparatus of the prior art;
FIG. 7 shows a diagram of a signal reflected from a target, in a 3D radar apparatus of the invention.

### Detailed description of a preferred embodiment

Referring to the accompanying figures, a radar apparatus of the invention, generally designated by numeral 1, is adapted to be used, as is known in the art, to detect a target O, such as an object or a person, within a predetermined area A being monitored.

Particularly, the radar apparatus 1 of the invention will be suitable for both civil and military applications.

For example, in addition to detection of a target O in space, the apparatus 1 may allow vision through walls and non-metal obstacles, for peripheral control even in the presence of walls or vegetation, to look for survivors under emergency conditions, in the presence of obstacles, smoke, gas and to look for objects buried in the ground at low depth.

The apparatus 1 will basically comprise at least one transmitting device 2 and at least three receiving devices 3, that may be integrated in a single device having both transmit and receive functions.

Particularly, the transmitting device 2 will be designed to transmit a RF signal S_{OUT} to the predetermined area A to identify any target O therein and generate corresponding reflected RF signals S_{IN}, that will be received by the receiving devices 3.

The apparatus 1 also comprises electronic processing and control means 4 operatively connected to both transmitting 2 and receiving 3 devices.

The electronic means 4 are designed to control the transmission of the RF signal S_{OUT} by the transmitting device 2 and to process the reflected signals S_{IN} received by the receiving devices 3.

According to a peculiar feature of the invention, the electronic processing and control means 4 are designed to control activation of the receiving devices 3 after a predetermined off-time t from the transmission of the transmitted signal S_{OUT} by the transmitting device 2.

Furthermore, the electronic processing and control means 4 also control "windowing" of the receiving devices 3, i.e. the on-time, i.e. the time in which they are on and can receive RF signals S_{IN}.

In a particularly advantageous embodiment, the predetermined off-time t will be substantially close to the sum of the time t' required for the transmitted signal S_{OUT} to reach the predetermined area A and bounce over targets O therein and the time t" necessary for the reflected signals S_{IN} so generated to later reach its respective receiving devices 3.

However, in an alternative embodiment, the predetermined off-time t may be shorter than the sum of the time t' and the time t", although this still affords some power savings.

Particularly, the predetermined off-time t may be equal to or shorter than the estimate of the sum of the time t' and the time t".

In a further configuration, the predetermined off-time t may be equal to such sum increased by a predetermined time value Δt, which is preferably kept constant throughout the transmit/receive cycles in one scan.

This will be particularly useful when there is the need to exclude the main signal and detect the echo signals associated with the reflected signal S_{IN} and unforeseeably generated by further bounces of the signal S_{IN} reflected by the target O, as a result of the presence of objects and/or persons near the main target O.

This will also allow discrimination of any noise associated with the reflected signal S_{IN}.

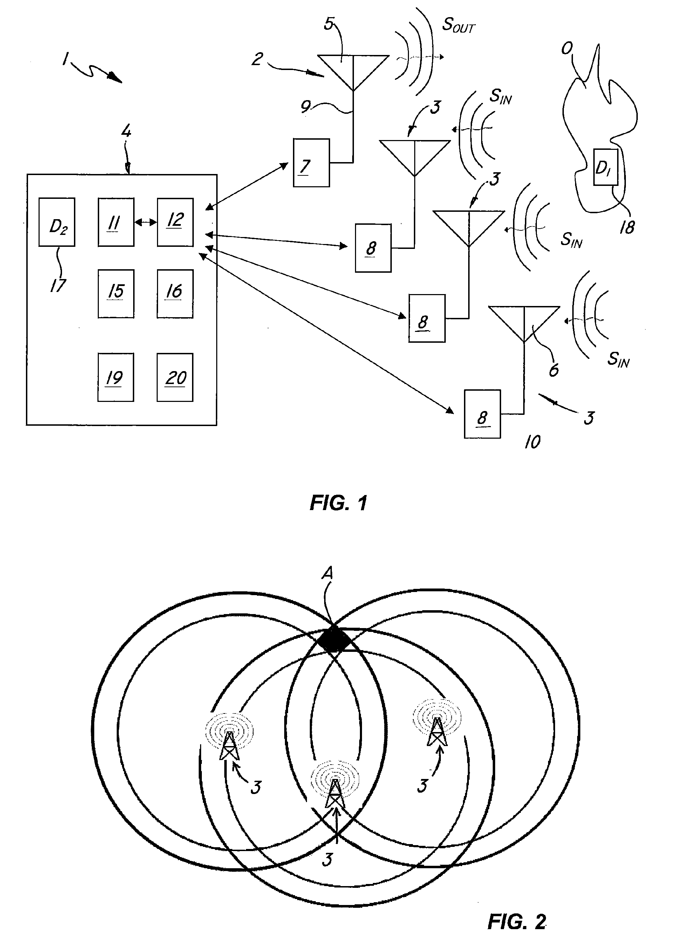

In a particular configuration, as schematically shown in Fig. 1, each device 2, 3 will include an antenna, i.e. a antenna, respectively transmitting 5 and receiving 6, which is operatively connected to a corresponding electronic enabling unit, referenced 7 and 8 respectively.

The processing and control means 4 are connected to the electronic units 7, 8 for selectively switching on/off them.

Thus, the electronic means 4 will switch on/off the receiving electronic enabling unit 8 to transmit thereto the reflected signals S_{IN} received by the receiving antennas 6, which are, as a rule, electromagnetically passive elements.

By mere way of example, the transmitting and receiving electronic enabling units 7, 8 may include a RF signal generator and a RF signal receiver respectively, not shown and known per se, which are connected to the electronic means 4 and, through a transmission line 9, 10 of known and predetermined length, to their respective antennas 5, 6.

In a further possible configuration, the time increase may be substantially constant and equal to the delay associated with the receiving device 3 and required for propagation of the reflected signal S_{IN}, once the latter has been received by the receiving antenna 6, to the electronic processing and control means 4, through the electronic enabling unit 8.

Therefore, the additional time value will be proportional to the delay introduced by the transmission line 10.

The radar apparatus 1 of the invention may be one-dimensional, two-dimensional or possibly of 3D type, i.e. capable of detecting and reconstructing the three-dimensional shape of the target O detected within the area A being scanned.

As shown in Fig. 1, the 3D radar apparatus 1 comprises a transmitting device 2 and three receiving devices 3.

However, the 3D apparatus may also include a device that has both transmit and receive functions, and is thus composed of three devices, thereby minimizing the overall size of the apparatus 1.

It shall be understood that this embodiment has to be considered as merely illustrative and without limitation to the invention.

Further embodiments may be provided, in which, for instance, all the devices have both receive and transmit functions, or in which more than three receiving devices are provided, one or more of which also has transmit functions.

If the radar apparatus is of 3D type, then the electronic means 4 will be operatively connected to all transmitting devices 2 and all receiving devices 3.

Furthermore, the electronic means 4 are designed to control the receiving devices 3 in an independent manner, by setting an off-time t for each of them.

Thus, upon transmission of the RF signal S_{OUT}, the receiving device/s 3 may be kept off, thereby reducing the power consumption of the radar apparatus 1.

Therefore, in case of portable radar apparatus 1, either a longer charge duration is obtained with equally sized batteries or smaller batteries may be used with equal durations, which affords a further size reduction.

Therefore, insensitivity to noise, especially the noise that is intentionally generated by users to prevent radar detection, will be greatly increased.

Time windowing of the receiving devices 3 will both allow background and overall noise reduction and prevent such noise, especially when intentionally generated, from saturating the receiving devices 3 themselves, and hence from making them unable to receive.

Regardless of the type of apparatus 1, the electronic processing and control means 4 may comprise a logic control unit 11, generally of programmable type, and electronic interface circuits 12 for connection of the logic unit 11 to the transmitting and receiving devices 2, 3.

In another aspect, the receive antennas 6 and possibly the transmit antenna/s 5 are of the omnidirectional type.

For example, they may consist of plates or metal coatings on PCB boards.

There is obviously a wide choice thereof, allowing further optimization of the size of the radar apparatus 1 of the invention, as well as its applicability to support elements, as more clearly explained hereinafter.

In another particularly advantageous aspect, the transmit RF signal S_{OUT} is of impulsive type, to define a pulsed radar apparatus 1.

In a particular use, as shown in Fig. 2, the area A being monitored may be defined by the intersection of three spherical or elliptical shells, each for one of the receive antennas 6.

Each shell will have a minimum radius defined by the power of the pulse and the propagation time of the transmitted signal S_{OUT}.

The on-time windowing of each receiving device 3 will define the minimum radius of the related shell.

The width of the shell will be also determined by the time length of the transmitted pulse and be particularly proportional thereto.

The minimum range will be limited by the interval of time during which the transmitted pulses directly reach the receiving antennas 6. Such range will particularly be of the order of a few tens of centimeters.

The maximum range will be defined by the power of the transmitted signal S_{OUT} and may be, without limitation, of a few tens of meters.

The frequency of the pulse may be selected from a wide range of values, according to particular applications.

As a rule, the available power may be conveyed in a very short pulse, thereby increasing detection definition.

Otherwise, with the same desired resolution, the transmitted RF signal S_{OUT} may have a lower power than in equivalent prior art radar apparatus, thereby obviously involving power savings.

It will be further appreciated that, using very short pulses, e.g. of a few nanoseconds or less, a high radial resolution can be ensured, and an apparatus of so-called ultra-wideband type may be obtained, due to the wide band simultaneously occupied by such pulses.

In this case, the radar apparatus 1 may detect and reconstruct the three-dimensional shape of targets O that, considering the known penetration characteristics of ultra wideband signals, are located beyond non-metal obstacles, such as brick walls, concrete walls, reinforced concrete or buried in the ground.

Typical frequency values of pulses adapted to be used in this kind of applications range from 500 MHz to 2 GHz.

The short duration of the pulse makes the ultra wideband signal poorly sensitive to interferences caused by the reflection of the wave.

Furthermore, the relatively large bandwidth will cause a reduction of energy density, which will reduce the energy cost of the signal and reduce noise sensitivity, as signal intensity will be similar to background noise.

If there is no surface penetration need, the transmitted pulse may have higher frequency values.

For instance, frequency may range from 3,1 GHz to 10,6 GHz, from 12 GHz to 18 GHz or from 22 GHz to 29 GHz.

Concerning construction, the radar apparatus 1 of the invention may be contained in a single load-bearing structure, adapted to be associated with or integrated in a support.

While the radar apparatus 1 may be used in any form, its miniaturization will obviously allow it to be used as a portable apparatus, unlike equivalent prior art apparatus.

Furthermore, in this case, its conformation and particularly the configuration of its antennas will allow the radar apparatus 1 to be associated with a garment article adapted to be worn by a user U.

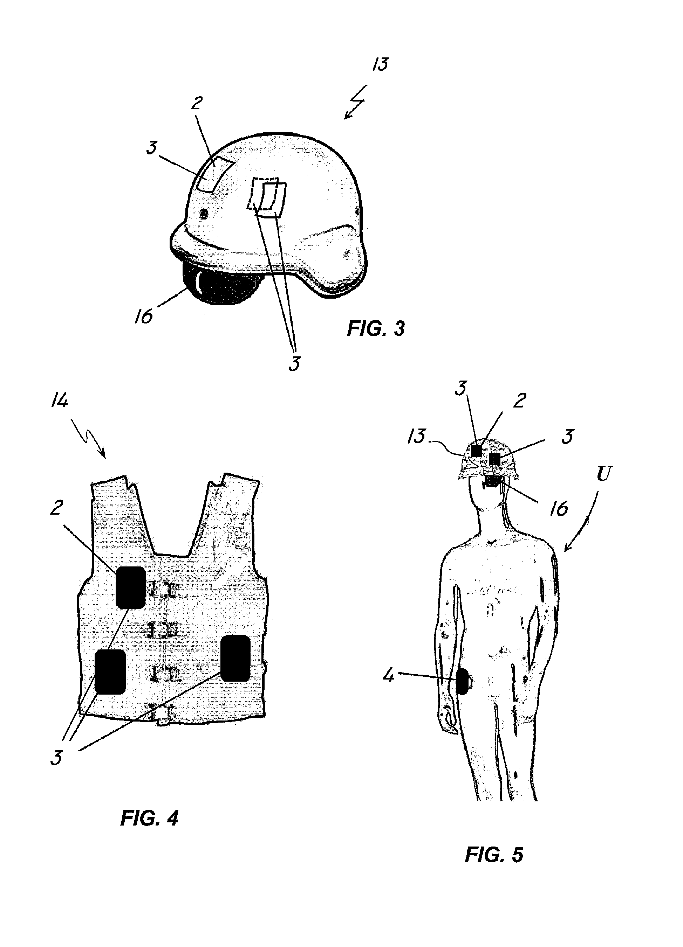

As shown in Figs. 3 to 5, the apparatus may be associated with a garment article, possibly integrated therein, such as a helmet 13, a bullet-proof vest 14 or other clothing elements such as, without limitation, armbands, bootlegs, shirts, jackets or the like.

Particularly, the use of omnidirectional antennas, the windowing of receiving antennas 6, the use of a pulsed radar, are construction features that help to obtain a compact, small-size, easily shapeable, low power-consumption radar apparatus 1, that can be thus easily associated to a clothing element.

As a result, the user U will be totally free to move and can actively join actions.

In another aspect of the invention, the radar apparatus 1 comprises communication means 15 for connecting the electronic processing and control means (4) to other equivalent radar apparatus and/or with an information center for information exchange.

This will allow both transfer of detected information to other users U and reception of data concerning such users or the detected targets.

Information sharing is a considerable advantage, allowing to complete monitoring of an area A in shorter time, and obtain information about areas that a radar apparatus 1 might be unable to reach.

The radar apparatus 1 may also comprise interface means 16 for display to the user U the information received from the electronic processing and control means 4, i.e. what has been detected by the radar scan he/she has made and possibly the radar scans made by other users.

For instance, the display interface means 16 consist of a transparent screen to be worn as glasses or a helmet face shield.

Thus, the user U may easily see what has been detected by the radar apparatus 1 and will also have no obstacle in what he/she sees around him/her.

Furthermore, the superimposed view of what is visible and what has been detected allows optimized assessment by the user U, with apparent operational advantages when operating indoors or under poor visibility conditions.

Furthermore, if the apparatus 1 is integrated or integrally attached to the helmet 11, it will allow detection of targets O throughout the visual range of the user U, and thus provide advantages under poor or no visibility conditions.

In a particular configuration, the apparatus 1 may be divided into two distinct parts.

Preferably, a first part includes the receiving antennas 6 and the transmitting antennas 5, and a second part includes the circuitry with the electronic processing and control means 4.

In this case, the radar apparatus 1 may be associated with a garment assembly comprising a first garment article, such as a helmet 11, comprising the first part of the apparatus 1 and a second garment article, such as a jacket 12, comprising the second part of the apparatus 1.

Here, data connection means are provided, for operatively connecting the devices 2, 3 to the electronic processing and control means 4.

The connection means may be provided in various forms. The simplest form consists of electric cables, although wireless RF communication devices, such as Bluetooth® devices, may be also used.

For this purpose, the processing means 4 may comprise or be adapted to be connected to storage means 17 containing target identifying data D₁.

For instance, such data D₁ may concern authorized targets O within a delimited area A being monitored by the radar apparatus 1 of the invention.

Particularly, the electronic processing and control means 4 are operatively connected to the transmitting antenna 6 to control transmission of a RF signal S_{Q} adapted to query a transponder 18 associated with the target O.

On the other hand, the receiving device/s 3 are designed to process a response signal S_{A} of the transponder 18 and extract identification data D₂ therefrom.

Advantageously, both the query signal S_{Q} and the response signal S_{A} are of the RFID type.

Particularly, the query signal S_{Q} may be contained in the transmitted identification signal S_{OUT} and the response signal S_{A} may be contained in the reflected signal S_{IN}.

In this case, the processing and control means 4 may include a circuitry portion 19, which is adapted to introduce the query signal S_{Q} of RFID elements into the RF signal S_{OUT} to be transmitted, and to extract response signals S_{A} of RFID elements from the received RF signal S_{IN}.

Thus, this identification function will be ensured by the electronic circuits that are designed to transmit and receive the RF radar signals S_{OUT} and S_{IN}, which will afford lower electronic circuitry requirements, lower power consumption, and lower space requirements.

Furthermore, the antenna that is designed to transmit the query signal S_{Q} is the transmitting radar antenna 5 itself, which will reduce costs and space requirements.

Also, the provision of a single transmitted signal to both detect and identify the target O will afford further power savings and considerably reduce the time required for identification of the target O.

The electronic means 4 will be designed to extract identification data D₂ to be transmitted to the storage means 17, which will compare the received data D₂ with the stored data D₁ to confirm a match, if any.

More in detail, the storage means 17 will contain identification data for authorized or known targets O.

If a reflected radar signal S_{IN} indicates the presence of one or more targets O and there is no RFID response data from a transponder 18, i.e. the target O has no transponder 18, there will be no such match with the data D₁ contained in the storage means 17, and no signal will be emitted therefrom.

Likewise, the storage means 17 will emit no signal in the presence of RFID response data that does not match any stored data D₁.

The processing means 4 may also be designed to represent the detected targets O with different colors according to the received RFID signal.

In another aspect of the invention, the radar apparatus 1 may comprise at least one circuit 20 for receiving and processing signals from a satellite positioning system, not shown, which is adapted to provide the absolute position of the radar apparatus 1 and identify through it the absolute positions of the targets O in the predetermined area A.

This feature is particularly useful when the detection data is communicated to equivalent radar apparatus or to the information center, as it helps to build an accurate picture of the situation.

In operation, the radar apparatus 1, unlike prior art apparatus that have one or more generally moving transmit antennas for transmitting directional RF signals and receiving devices always enabled to receive reflected signals and determine the position and possibly the shape of the detected target, will divide the area A to be monitored into a three-dimensional matrix.

Then, the apparatus 1 will generate a pulse for monitoring one element of the matrix and will define the off time t of the receiving devices.

For instance, the apparatus 1 will estimate the time required for the pulse to reach each receiving antenna 6 if it is reflected by something in the relevant matrix element.

After a time equal to the predetermined time t, the processing means 4 will turn on the receiving devices 3 for a time corresponding to the time of the generated pulse.

Combined detection in the relevant area A will be result from the sum of successive detections of the individual elements.

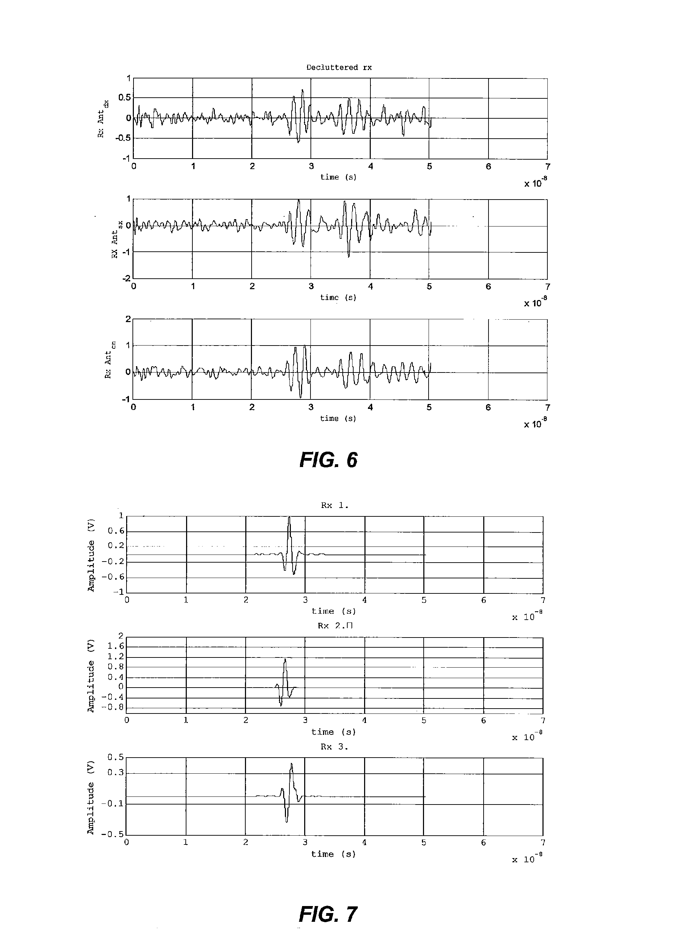

FIGS. 6 and 7 show two series of charts, representing the signal S_{IN} reflected by a target O in an area A being scanned, for a 3D radar apparatus of the prior art and a 3D radar apparatus of the invention.

Particularly, each series is composed of three charts, each for a signal received by a different receive antenna of the apparatus.

The charts consider a target O consisting of a 20 cm-wide and 35 cm-high metal plate.

Referring to three Cartesian axes X, Y, Z, whose origin is the center of gravity of the receive antennas, the coordinates of the target are as follows: x=0,5 m; y=4 m; z=0 m.

The apparatus comprises a transmitting device 2 operating in a frequency range from 500 MHz and 2 GHz with 30 W peak power and planar Bow-Tie antennas.

Fig. 6 represents the condition of an apparatus in which the receiving devices are kept constantly on.

Fig. 7 represents the condition of an apparatus of the invention, in which the three receiving devices 3 are turned off for a time t of 27,6ns, 26,7ns and 27,7ns respectively, with an on-time or window of 1,5ns.

The comparison of the two series of charts shows that, in the on-window, the reflected signal S_{IN} received by the antennas is substantially comparable with the one detected by receiving devices that are constantly on, and will allow high-resolution reconstruction of the detected target.

The above clearly shows that the radar apparatus of the invention fulfills all the intended objects and particularly meets the requirement of allowing detection of targets, possibly 3D targets, in a relevant area, with a particularly high detection definition, for optimally accurate identification of objects or persons in the area being monitored.

Furthermore, its particularly compact size and low power consumption ensure high portability and long uptime, while allowing it to be attached to clothing elements such as jackets, vests or helmets.

The radar apparatus, clothing element and support unit of the invention are susceptible of a number of changes and variants, within the inventive principle disclosed in the appended claims. All the details thereof may be replaced by other technically equivalent parts, and the materials may vary depending on different needs, without departure from the scope of the invention.

While the apparatus, clothing element and support unit have been described with particular reference to the accompanying figures, the numerals referred to in the disclosure and claims are only used for the sake of a better intelligibility of the invention and shall not be intended to limit the claimed scope in any manner.

## Claims

1. A radar apparatus for detecting targets (O) within a predetermined area (A), comprising:
- at least one transmitting device (2) designed to transmit a RF signal (S_{OUT}) toward the predetermined area (A) for detecting possible targets (O) thereinside and generating corresponding reflected RF signals (S_{IN});
- at least one receiving device (3) designed to receive said reflected signals (S_{IN});
- electronic processing and controlling means (4) operatively connected to said at least one transmitting device (2) and to said at least one receiving device (3) to control the transmission of said RF signal (S_{OUT}) by said transmitting device (2) and processing said reflected signals (S_{IN});
wherein said electronic processing and controlling means (4) are designed to control the activation of said at least one receiving device (3) after a predetermined off-time from the transmission of said transmitted signal (S_{OUT}) by said at least one transmitting device (2);
**characterized by** comprising at least three receiving devices (3) to define a 3D radar apparatus, said electronic processing and controlling means (4) being adapted to divide the area (A) into a three-dimensional matrix of elements and estimate in each of said elements the time required for said reflected signals (S_{IN}) to reach each of said receiving devices (3) and activate them in an independent manner by setting a respective predetermined off-time (t).

2. Radar apparatus as claimed in claim 1, **characterized in that** said predetermined off-time (t) is equal o lower to the sum of time (t') necessary to said transmitted signal (S_{OUT}) to reach the predetermined area (A) and to be reflected by possible targets (O) thereinside and of a time (t") necessary to said reflected signals (S_{IN}) for later reaching said receiving devices (3).

3. Radar apparatus as claimed in claim 1, **characterized in that** said predetermined time (t) is equal to the sum of a time (t') necessary to said transmitted signal (S_{OUT}) to reach the predetermined area (A) and to be reflected by possible targets (O) thereinside and of a time (t") necessary to said reflected signals (S_{IN}) to later reach said receiving devices (3) increased by a predetermined time value (Δt).

4. Radar apparatus as claimed in claim 3, **characterized in that** said receiving device (3) comprises a receiving antenna (6) and a switching electronic unit (8), said processing and controlling means (4) being connected to said switching electronic unit (8) to selectively switching on/off the transmission of said reflected signal (S_{IN}) received from said receiving antenna (6) to said switching electronic unit (8).

5. Radar apparatus as claimed in claim 4, **characterized in that** said time value (Δt) is substantially constant and equal to the delay associated to said receiving device (3), wherein said delay is equal to the time necessary to said reflected signal (S_{IN}) to propagate from said receiving antenna (6) to said processing and controlling means (4) through said switching electronic unit (8).

6. Radar apparatus as claimed in any preceding claim, **characterized in that** said RF signal (S_{OUT}) is of the impulsive type.

7. Radar apparatus as claimed in any preceding claim, **characterized by** comprising communication means (15) designed to connect said processing and controlling means (4) with further radar apparatus and/or with a operative central for information exchange.

8. Radar apparatus as claimed in any preceding claim, **characterized by** comprising interfacing means (16) for displaying information from said electronic processing and controlling means (4) to an user (U).

9. Radar apparatus as claimed in any preceding claim, **characterized in that** said electronic processing and controlling means (4) comprise at least one circuit (20) designed for receiving and processing signals containing the position of said radar apparatus (1) e for determining the absolute position of the target (O) in the area (A).

10. Radar apparatus as claimed in any preceding claim, **characterized in that** said electronic processing and controlling means (4) are adapted to generate a radar signal (S_{Q}) for querying a transponder (18), said at least one receiving device (3) being designed to process a response signal (S_{A}) of said transponder (18) and to detect an identification data (D₂).

11. Radar apparatus as claimed in claim 10, **characterized in that** said electronic processing and controlling means (4) comprise memory means (17) containing identification data (D₁) associated to the targets (O) and connected to said at least one receiving device (3) for receiving said detected identification data (D₂) and comparing it with said associated identification data (D₁).

12. Radar apparatus as claimed in claims 10 or 11, **characterized in that** said electronic processing and controlling means (4) comprise at least one circuital section (19) designed to insert said interrogation signal (S_{Q}) into said transmitted signal (S_{OUT}) and to extract said response signal (S_{A}) from said reflected signal (S_{IN}).

13. Radar apparatus as claimed in any preceding claim from 10 to 12, **characterized in that** said querying signal (S_{Q}) and said response signal (S_{A}) are RFID type.

14. Garment article wearable by an user (U), **characterized by** comprising a radar apparatus (1) as claimed in any preceding claim.

15. Garment assembly to be used in combination with a radar apparatus (1) as claimed in any preceding claims 1 to 13, **characterized by** comprising a first garment article (13) wearable by an user (U) which is associated with at least one transmitting device (2) and at least one receiving device (3), at least one second garment article (14) wearable by the same user (U) which is associated with electronic processing and controlling means (4), connecting means being provided which are associated to one between said first (13) and second (14) garment articles designed and which are adapted to operatively connect said electronic processing and controlling means (4) with said at least one transmitting device (2) and said at least one receiving device (3).

16. A method for detecting targets (O) within a predetermined area (A) using a 3D radar apparatus according one or more of the claims 1 to 13, which method comprises the following steps:
a) transmitting at least one RF signal (S_{OUT}) by at least one transmitting device (2) toward a predetermined area (A) for detecting possible targets (O) thereinside and generating corresponding reflected RF signals (S_{IN});
b) receiving said reflected signals (S_{IN}) with at least three receiving devices (3);
c) processing and controlling the transmission of said RF signal (S_{OUT}) and said reflected signals (S_{IN}) by activating said receiving devices (3) after a predetermined off-time (t) from the transmission of said transmitted signal (S_{OUT});
**characterized by** comprising a step of dividing the area (A) to be monitored into a three-dimensional matrix and estimating for each of the matrix elements the time required for said reflected signals (S_{IN}) to reach each of said receiving devices (3), said activating step being carried out in an independent manner by setting a respective predetermined off-time (t) for each of said receiving devices (3).

17. Method according claim 16, **characterized in that** said area (A) is detected by the sum of the successive detections of the individual matrix elements.

18. Method according claims 16 or 17 **characterized in that** said RF signal (S_{OUT}) are of the impulsive type, said receiving devices (3) being activated for a time corresponding to the time of the generated pulse.

## Patentansprüche

1. Eine Radar-Vorrichtung zum Erfassen von Zielen (O) innerhalb eines vorbestimmten Bereichs (A) mit
- mindestens einer Übertragungsvorrichtung (2), die ausgelegt ist ein RF-Signal (Sₒᵤₜ) zu übertragen in Richtung des vorbestimmten Bereichs (A) zum Erfassen möglicher Ziele (O) darin und zum Erzeugen entsprechender reflektierter RF-Signale (S_{IN}),
- mindestens einer Empfangsvorrichtung (3), die ausgelegt ist, die reflektierten Signale (S_{IN}) zu empfangen,
- elektronischen Verarbeitungs- und Steuereinrichtungen (4), die funktionell verbunden sind mit der mindestens einen Übertragungsvorrichtung (2) und mit der mindestens einen Empfangsvorrichtung (3) zur Steuerung der Übertragung des RF-Signals (Sₒᵤₜ) mittels der Übertragungsvorrichtung (2) und zum Verarbeiten der reflektierten RF-Signale (S_{IN}),
wobei die elektronischen Verarbeitungs- und Steuereinrichtungen (4) ausgelegt sind zur Steuerung der Aktivierung der mindestens einen Empfangsvorrichtung (3) nach einer vorbestimmten Ruhezeit von der Übertragung des übertragenen Signals (Sₒᵤₜ) mittels der mindestens einen Übertragungsvorrichtung (2),
**dadurch gekennzeichnet, dass** mindestens drei Empfangsvorrichtungen (3) vorgesehen sind, um eine 3D Radar-Vorrichtung zu bilden, wobei die elektronischen Verarbeitungs- und Steuereinrichtungen (4) ausgelegt sind, den Bereich (A) in eine dreidimensionale Elementen-Matrix zu teilen und in jedem der Elemente die Zeit abzuschätzen, die für die reflektierten Signale (S_{IN}) erforderlich ist, um jede der Empfangsvorrichtungen (3) zu erreichen und diese unabhängig zu aktivieren durch Setzen einer jeweils vorbestimmten Ruhezeit (t).

2. Radar-Vorrichtung gemäß Anspruch 1, **dadurch gekennzeichnet, dass** die vorbestimmte Ruhezeit (t) gleich oder niedriger ist als die Zeitsumme (t'), die erforderlich ist für das übertragene Signal (S_{OUT}), um den vorbestimmten Bereich (A) zu erreichen und reflektiert zu werden von möglichen Zielen (O) darin und einer Zeit (t"), die erforderlich ist für die reflektierten Signale (S_{IN}), um später die Empfangsvor-richtungen (3) zu erreichen.

3. Radar-Vorrichtung gemäß Anspruch 1, **dadurch gekennzeichnet, dass** die vorbestimmte Ruhezeit (t) gleich ist einer Zeitsumme (t'), die erforderlich ist für das übertragene Signal (S_{OUT}), um den vorbestimmten Bereich (A) zu erreichen und reflektiert zu werden von möglichen Zielen (O) darin und einer Zeit (t"), die erforderlich ist für die reflektierten Signale (S_{IN}), um später die Empfangsvorrichtungen (3) zu erreichen zuzüglich eines vorbestimmten Zeitwerts (Δt).

4. Radar-Vorrichtung gemäß Anspruch 3, dadurch gekennzeich-net, dass die Empfangsvorrichtung (3) eine Empfangsantenne (6) und eine elektronische Schalteinheit (8) aufweist, wobei die elektronischen Verarbeitungs- und Steuereinrichtungen (4) verbunden sind mit der elektronischen Schalteinheit (8), um wahlweis die Übertragung des reflektierten Signals (S_{IN}), das von der Empfangsantenne (6) empfangen wurde, zu der elektronischen Schalteinheit (8) an/aus zu schalten.

5. Radar-Vorrichtung gemäß Anspruch 4, **dadurch gekennzeichnet, dass** der Zeitwert (Δt) im Wesentlichen konstant ist und gleich der Verzögerung, die der Empfangsvorrichtung (3) zugeordnet ist, wobei die Verzögerung gleich ist der Zeit, die für das reflektierte Signal (S_{IN}) erforderlich ist, um sich von der Empfangsantenne (6) auszubreiten zu den Verarbeitungs- und Steuereinrichtungen (4) durch die elektronische Schalteinheit (8).

6. Radar-Vorrichtung gemäß einem der vorhergehenden Ansprüche, **dadurch gekennzeichnet, dass** das RF-Signal (S_{OUT}) von der impulsiven Art ist.

7. Radar-Vorrichtung gemäß einem der vorhergehenden Ansprüche, **dadurch gekennzeichnet, dass** Kommunikationseinrichtungen (15) vorgesehen sind, die ausgelegt sind die Verarbeitungs- und Steuereinrichtungen (4) zu verbinden mit weiteren Radar-Vorrichtungen und/oder mit einer operativen Zentrale zum Informationsaustausch.

8. Radar-Vorrichtung gemäß einem der vorhergehenden Ansprüche, **dadurch gekennzeichnet, dass** Schnittstelleneinrichtungen (16) vorgesehen sind zur Anzeige von Information von den elektronischen Verarbeitungs- und Steuereinrichtungen (4) an einen Nutzer (U).

9. Radar-Vorrichtung gemäß einem der vorhergehenden Ansprüche, **dadurch gekennzeichnet, dass** die elektronischen Verarbeitungs- und Steuereinrichtungen (4) mindestens einen Schaltkreis (20) aufweisen, der ausgelegt ist zum Empfang und zum Verarbeiten von Signalen, die die Position der Rardar-Vorrichtung (1) enthalten zum Bestimmen der absoluten Position des Ziels (O) in dem Bereich (A).

10. Radar-Vorrichtung gemäß einem der vorhergehenden Ansprüche, **dadurch gekennzeichnet, dass** die elektronischen Verarbeitungs- und Steuereinrichtungen (4) ausgelegt sind zur Erzeugung eines Radarsignals (S_{Q}) zum Abfragen eines Transponders (18), wobei die mindestens eine Empfangsvorrichtung, (3) so ausgelegt ist, dass sie ein Antwortsignal (S_{A}) des Transponders (18) verarbeitet und eine Identifikationskennung (D₂) erfasst.

11. Radar-Vorrichtung gemäß Anspruch 10, **dadurch gekennzeichnet, dass** die elektronischen Verarbeitungs- und Steuereinrichtungen (4) Speichereinrichtungen (17) enthalten, die Identifikationskennungen (D₁) enthalten, die den Zielen (O) zugeordnet sind und verbunden sind mit der mindestens einen Empfangsvorrichtung (3) zum Empfang der erfassten Identifikationskennung (D₂) und zu deren Vergleich mit den zugeordneten Identifikationskennungen (D₁).

12. Radar-Vorrichtung gemäß Anspruch 10 oder 11, **dadurch gekennzeichnet, dass** die elektronischen Verarbeitungs- und Steuereinrichtungen (4) mindestens einen schaltkreisartigen Bereich (19) enthalten, der ausgelegt ist, das Abfragesignal (S_{Q}) in das übertragene Signal (S_{OUT}) einzusetzen und das Antwortsignal (S_{A}) aus dem reflektierten Signal (S_{IN}) zu extrahieren.

13. Radar-Vorrichtung gemäß einem der vorhergehenden Ansprüche 10 bis 12, **dadurch gekennzeichnet, dass** das Abfragesignal (S_{Q}) und das Antwortsignal (S_{A}) von der RFID-Art sind.

14. Bekleidungsstück, das von einem Nutzer (U) getragen werden kann, **dadurch gekennzeichnet, dass** es eine Radar-Vorrichtung (1) gemäß einem der vorhergehenden Ansprüche aufweist.

15. Bekleidungssatz, der in Verbindung mit einer Radar-Vorrichtung (1) genutzt werden kann gemäß einem der vorhergehenden Ansprüche 1 bis 13, **dadurch gekennzeichnet, dass** vorgesehen ist: ein erstes Bekleidungsstück (13), das von einem Nutzer (U) getragen werden kann, der mindestens einer Übertragungsvorrichtung (2) und mindestens einer Empfangsvorrichtung (3) zugeordnet ist, mindestens ein zweites Bekleidungsstück (14), das von dem selben Nutzer (U) getragen werden kann, der elektronischen Verarbeitungs- und Steuereinrichtungen (4) zugeordnet ist, wobei Verbindungseinrichtungen vorgesehen sind, die einem von den ersten (13) und zweiten (14) Bekleidungsstücken zgeordnet sind, die ausgelegt sind und die angepasst sind, die elektronischen Verarbeitungs- und Steuereinrichtungen (4) funktionell zu verbinden mit der mindestens einen Übertragungsvorrichtung (2) und der mindestens einen Empfangsvorrichtung (3).

16. Ein Verfahren zum Erfassen von Zielen (O) in einem vorbestimmten Bereich (A) mit einer 3D Radar-Vorrichtung gemäß einem oder mehreren der Ansprüche 1 bis 13, wobei dieses Verfahren die folgenden Schritte umfasst:
a) Übertragen von mindestens einem RF Signal (Sₒᵤₜ) mittels mindestens einer Übertragungsvorrichtung (2) in Richtung eines vorbestimmten Bereichs (A) zum Erfassen möglicher Ziele (O) darin und zum Erzeugen entsprechender reflektierter RF-Signale (S_{IN}),
b) Empfangen der reflektierten Signale (S_{IN}) mit mindestens drei Empfangsvorrichtungen (3),
c) Verarbeiten - und Steuern (4) des RF Signals (Sₒᵤₜ) und der reflektierten RF-Signale (S_{IN}) durch Aktivieren der Empfangsvorrichtungen (3) nach einer vorbestimmten Ruhezeit (t) von der Übertragung des übertragenen RF Signals (Sₒᵤₜ), **gekennzeichnet durch** Vorsehen eines Schritts des Teilens des Bereichs (A) und Darstellen in einer dreidimensionalen Matrix und abschätzen für jedes der Matrixelemente die erforderliche Zeit für die reflektierten Signale (S_{IN}), um jede der Empfangsvorrichtungen (3) zu erreichen, wobei der Schritt des Aktivierens auf unabhängige Weise ausgeführt wird **durch** Setzen einer jeweils vorbestimmten Ruhezeit (t) für jede der Empfangsvorrichtungen (3).

17. Verfahren gemäß Anspruch 16, **dadurch gekennzeichnet, dass** der Bereich (A) erfasst wird mittels der Summe der aufeinander folgenden Erfassungen der individuellen Matrixelemente.

18. Verfahren gemäß Anspruch 16 oder 17, **dadurch gekennzeichnet, dass** das RF Signal (Sₒᵤₜ) von der impulsiven Art ist, wobei die Empfangsvorrichtungen (3) aktiviert werden für eine Zeit, die der Zeit des generierten Pulses entspricht.

## Revendications

1. Appareil de radar pour détecter des cibles (O) à l'intérieur d'une zone prédéterminée (A), comprenant :
- au moins un dispositif d'émission (2), conçu pour émettre un signal RF (S_{OUT}) vers la zone prédéterminée (A) pour détecter d'éventuels cibles (O) à l'intérieur de celle-ci et pour générer des signaux RF réfléchis correspondants (S_{IN}) ;
- au moins un dispositif de réception (3) conçu pour recevoir lesdits signaux réfléchis (S_{IN}) ;
- des moyens de traitement et de commande électroniques (4) connectés fonctionnellement audit au moins un dispositif d'émission (2) et audit au moins un dispositif de réception (3) afin de commander l'émission dudit signal RF (S_{OUT}) par ledit dispositif d'émission (2) et de traiter lesdits signaux réfléchis (S_{IN}).
dans lequel lesdits moyens de traitement et de commande électroniques (4) sont conçus de façon à commander l'activation dudit au moins un dispositif de réception (3) après un temps de repos prédéterminé depuis l'émission dudit signal émis (S_{OUT}) par ledit au moins un dispositif d'émission (2) ;
**caractérisé en ce qu'**il comprend au moins trois dispositifs de réception (3) pour définir un appareil de radar tridimensionnel, lesdits moyens de traitement et de commande électroniques (4) étant aptes à répartir la zone (A) dans une matrice tridimensionnelle d'éléments et à estimer, dans chacun desdits éléments, le temps nécessaire pour que lesdits signaux réfléchis (S_{IN}) atteignent chacun desdits dispositifs de réception (3) et les activent de façon indépendante par la sélection d'un temps de repos prédéterminé respectif (t).

2. Appareil de radar selon la revendication 1, **caractérisé en ce que** ledit temps de repos prédéterminé (t) est égal ou inférieur à la somme du temps (t') nécessaire pour que ledit signal émis (S_{OUT}) atteigne la zone prédéterminée (A) et soit réfléchi par d'éventuels cibles (O) à l'intérieur de celle-ci et d'un temps (t") nécessaire pour que lesdits signaux réfléchis (S_{IN}) atteignent en suite lesdits dispositifs de réception (3).

3. Appareil de radar selon la revendication 1, **caractérisé en ce que** ledit temps prédéterminé (t) est égal ou inférieur à la somme du temps (t') nécessaire pour que ledit signal émis (S_{OUT}) atteigne la zone prédéterminée (A) et soit réfléchi par d'éventuels cibles (O) à l'intérieur de celle-ci et d'un temps (t") nécessaire pour que lesdits signaux réfléchis (S_{IN}) atteignent en suite lesdits dispositifs de réception (3), augmenté d'une valeur de temps prédéterminée (Δt).

4. Appareil de radar selon la revendication 3, **caractérisé en ce que** ledit dispositif de réception (3) comprend une antenne de réception (6) et une unité de commutation électronique (8), lesdits moyens de traitement et de commande (4) étant reliés à ladite unité de commutation électronique pour activer/désactiver l'émission dudit signal réfléchi (S_{IN}) reçu de ladite antenne de réception (6) à ladite unité de commutation électronique (8).

5. Appareil de radar selon la revendication 4, **caractérisé en ce que** ladite valeur de temps (Δt) est sensiblement constante et égale au retard associé audit dispositif de réception (3), dans lequel ledit retard est égal au temps nécessaire pour que ledit signal réfléchi (S_{IN}) se propage de ladite antenne de réception (6) auxdits moyens de traitement et de commande (4) à travers ladite unité de commutation électronique (8).

6. Appareil de radar selon n'importe laquelle des revendications précédentes, **caractérisé en ce que** ledit signal RF (S_{OUT}) est de type impulsif.

7. Appareil de radar selon n'importe laquelle des revendications précédentes, **caractérisé en ce qu'**il comprend des moyens de communication (15) conçus pour relier lesdits moyens de traitement et de commande (4) avec d'autres appareils de radar et/ou avec un central pour l'échange d'informations.

8. Appareil de radar selon n'importe laquelle des revendications précédentes, **caractérisé en ce qu'**il comprend des moyens d'interface (16) pour afficher des informations desdits moyens de traitement et de commande (4) à un utilisateur (U).

9. Appareil de radar selon n'importe laquelle des revendications précédentes, **caractérisé en ce que** lesdits moyens de traitement et de commande (4) comprennent au moins un circuit (20) conçu pour recevoir et traiter des signaux contenant la position dudit appareil de radar (1) et pour déterminer la position absolue du cible (O) dans la zone (A).

10. Appareil de radar selon n'importe laquelle des revendications précédentes, **caractérisé en ce que** lesdits moyens de traitement et de commande électroniques (4) sont aptes à générer un signal radar (S_{Q}) pour interroger un transpondeur (18), ledit au moins un dispositif de réception (3) étant conçu pour traiter un signal de réponse (S_{A}) dudit transpondeur (18) et pour détecter une donnée d'identification (D₂).

11. Appareil de radar selon la revendication 10, **caractérisé en ce que** lesdits moyens de traitement et de commande électroniques (4) comprennent des moyens de mémoire (17) contenant des données d'identification (D₁) associées aux cibles (O) et connectées audit au moins un dispositif de réception (3) pour recevoir ladite donnée d'identification détectée (D₂) et la comparer avec lesdites données d'identification associées (D₁).

12. Appareil de radar selon la revendication 10 ou 11, **caractérisé en ce que** lesdits moyens de traitement et de commande électroniques (4) comprennent au moins une section de circuit (19) conçu pour insérer ledit signal d'interrogation (S_{Q}) dans ledit signal émis (S_{OUT}) et pour extraire ledit signal de réponse (S_{A}) dudit signal réfléchi (S_{IN}).

13. Appareil de radar selon n'importe laquelle des revendications précédentes 10 à 12, **caractérisé en ce que** ledit signal d'interrogation (S_{Q}) et ledit signal de réponse (S_{A}) sont de type RFID.

14. Vêtement pouvant être porté par un utilisateur (U), **caractérisé en ce qu'**il comprend un appareil de radar (1) selon n'importe laquelle des revendications précédentes.

15. Ensemble de vêtement à utiliser en association avec un appareil de radar (1) selon n'importe laquelle des revendications précédentes 1 à 13, caractérisé en ce qui'il
comprend un premier vêtement (13) pouvant être porté par un utilisateur (U), associé à au moins un dispositif d'émission (2) et au moins un dispositif de réception (3), au moins un deuxième vêtement (14) pouvant être porté par le même utilisateur (U), associé à des moyens de traitement et de commande électroniques (4), des moyens de connexion étant prévus en association avec un desdits premier (13) et deuxième (14) vêtements prévus, et étant conçus pour connecter fonctionnellement lesdits moyens de traitement et de commande électroniques (4) avec ledit au moins un dispositif d'émission (2) et ledit au moins un dispositif de réception (3).

16. Procédé de détection de cibles (O) à l'intérieur d'une zone prédéterminée (A) au moyen d'un appareil de radar tridimensionnel selon une ou plusieurs des revendications 1 à 13, ledit procédé comportant les étapes suivantes :
a) émettre un signal RF (S_{OUT}) par au moins un dispositif d'émission (2) vers une zone prédéterminée (A) pour détecter d'éventuels cibles (O) à l'intérieur de celle-ci et pour générer des signaux RF réfléchis correspondants (S_{IN}) ;
b) recevoir lesdits signaux réfléchis (S_{IN}) avec au moins trois dispositifs de réception (3) ;
c) traiter et commander l'émission dudit signal RF (S_{OUT}) et desdits signaux réfléchis (S_{IN}) par l'activation desdits dispositifs de réception (3) après un temps de repos prédéterminé (t) depuis l'émission dudit signal émis (S_{OUT}) ;
**caractérisé en ce qu'**il comprend une étape pour repartir la zone (A) à contrôler dans une matrice tridimensionnelle et pour estimer pour chacun des éléments de la matrice, le temps nécessaire pour que lesdits signaux réfléchis (S_{IN}) atteignent chacun desdits dispositifs de réception (3), ladite étape d'activation étant effectuée de façon indépendante par la sélection d'un temps de repos prédéterminé respectif (t) pour chacun desdits dispositifs de réception (3).

17. Procédé selon la revendication 16, **caractérisé en ce que** ladite zone (A) est détectée part la somme des détections consécutives des éléments de matrice individuels.

18. Procédé selon la revendication 16 ou 17, **caractérisé en ce que** ledit signal RF (S_{OUT}) est de type impulsif, les dits dispositifs de réception (3) étant activés pendant un temps correspondant au temps de l'impulsion générée.
